# EUROPÄISCHE PATENTSCHRIFT

(11) **EP 0 554 580 B1**
(45) Veröffentlichungstag und Bekanntmachung des Hinweises auf die Patenterteilung: **15.05.1996**
(21) Anmeldenummer: 92200306.6
(22) Anmeldetag: 04.02.1992
(51) Int. Cl.: B01D 29/11

(54) **Vorrichtung zum Entfernen von Feststoffen aus einer strömenden Flüssigkeit, Verfahren zu deren Betrieb sowie Verwendung der Vorrichtung**
Apparatus for separating solids from a flowing liquid, method of operation and use of the apparatus
Appareil pour la séparation de matières d'un liquide courant, méthode de fonctionnement et utilisation de cet appareil

(43) Veröffentlichungstag der Anmeldung: 11.08.1993
(73) Patentinhaber: Fuchs Maschinenbau, CH-5620 Bremgarten (CH)
(72) Erfinder: Fuchs, Heinrich, CH-5620 Bremgarten (CH)
(74) Vertreter: Frauenknecht, Alois J.

(56) Entgegenhaltungen:
- EP-A- 0 225 401
- EP-A- 0 293 515
- CH-A- 484 687
- DE-A- 3 122 131
- DE-A- 3 915 529
- FR-A- 529 099
- WATER POLLUTION CONTROL FEDERATION AND AMERICAN SOCIETY OF CIVIL ENGINEERS 'WASTEWATER TREATMENT PLANT DESIGN' 1977 , LANCASTER PRESS INC. , LANCASTER, PA., USA

## Beschreibung

Die vorliegende Erfindung bezieht sich auf eine Vorrichtung zum Entfernen von Feststoffen vorgegebener Grösse aus einer in einem Kanal, bzw. Gerinne geführten, strömenden Flüssigkeit, welche Vorrichtung die Feststoffe in einem rohrförmigen Schneckenförderer mit einem axial frei durchgängigen Förderwendel verdichtet, entwässert und von diesem in ein Behältnis fördert.

Schneckenförderer sind bekannt (vgl. EP -A2- 0 293 515) und weisen ein Gehäuse mit Roststäben auf, durch welches das Siebgut gefördert, entwässert und verdichtet wird. Nachteilig hierbei ist, dass längliche Gegenstände, wie beispielsweise Wattestäbchen oder Teile von Binden, Klebstreifen, etc. durch die durch die Längsroste gebildeten Längsspalten entweichen können und dadurch angeschlossene biologische Kläranlagen und/oder Pumpeinrichtungen verstopfen. Ebenfalls gelangt nur ein Teil des Siebgutes in den Rechen; der übrige Teil fällt zu Boden und/oder verstopft den Rechen.

Bereits wurde erkannt, dass in den Wasserdurchlauf ragende Lagerflansche, Antriebsteile etc. den Durchlauf und damit die Sieb- und Rechenleistung reduzieren (DE -A1- 31 22 131), so dass der Antrieb der Förderschnecke nicht mehr stirnseitig über die Schneckenwelle eingeleitet wurde, sondern innerhalb eines geteilten Gehäuses, über einen drehbaren Gehäusering, welcher mit der Förderschnecke drehfest verbunden ist.

Diese Konstruktion ist relativ aufwendig und einem grossen Verschleiss unterworfen. Nachteilig ist zudem, dass der Wassereinlauf, bedingt durch die zentralen Lagerstellen, von oben erfolgen muss. Die Anlage eignet sich dementsprechend nicht zum Einbau in bestehende Kanäle bzw. Gerinne.

Ebenfalls bekannt (DE -A1- 3 915 529) ist eine Vorrichtung zum Entfernen von Rechen- und/oder Siebgut aus strömenden Flüssigkeiten, mit einem geradlinigen Schneckenförderer, der unter einem relativ steilen Winkel mit seinem Siebteil in ein Gerinne eintaucht. Der Förderwendel ist im zentralen Bereich wellenlos und in axialer Richtung durchgängig ausgebildet und einzig am oberen Ende der Förderstrecke gelagert. Das Aufnehmen des Rechengutes wird durch eine als Verschleissteil ausgestaltete Siebbürste unterstützt.

Diese Art Rechen erfordert eine sehr lange Förderstrecke, um Höhendifferenzen zu überwinden und erlaubt nur eine partielle Nutzung des schiefwinklig durchströmten Siebteils.

Aus der EP -A1- 0 225 401 ist eine Vorrichtung zum Abscheiden fester Schmutzteilchen aus Kühlwasser bekannt, wobei in einem Gehäuserohr ein trichterförmiges Fangsieb mit einer Spülwasserleitung vorgesehen ist.

Derartige Abscheider sind für hochbelastete Abwässer nicht geeignet.

CH -A5- 484 687 beschreibt eine Filterkerze, bei der in einem Mantelrohr Löcher vorgesehen sind, welche sich von der Innenseite der Kerzenwand nach der Aussenseite verengen und wobei diese Löcher eine spezielle durch Ausstechen erzielte Form aufweisen.

Diese Ausgestaltung der Löcher, bzw. Öffnungen, reduziert die Verstopfungsgefahr in Strömungsrichtung. Filterkerhen dieser Art sind für den Durchfluss grösserer Wassermengen ungeeignet, bzw. nicht anwendbar für einen Betrieb in Kläranlagen. Aus Water Pollution Control Federation and American Society of Civil Engineers, "Wastewater Treatment Plant Design", S. 84, 85 und 97, 1977, Lancaster, Pa., USA sind Schraubenpumpen bekannt, welche für Schmutzfrachten eingesetzt sind und elektronische Steuereinrichtungen zu deren automatischem Betrieb aufweisen.

Es ist deshalb Aufgabe der vorliegenden Erfindung, die Nachteile des Stands der Technik zu beheben und eine möglichst einfach gestaltete, sich weitgehend selbst reinigende Vorrichtung zu schaffen, welche einen hohen Reinigungseffekt aufweist und verunmöglicht, dass Festkörper ab einer bestimmten Grösse in den nachfolgenden Prozess eingeleitet werden können. Die Vorrichtung soll insbesondere für einen wirtschaftlichen Einsatz in Kläranlagen geeignet sein. Gleichzeitig soll ein zweckmässiges Verfahren zum Betrieb angegeben werden.

Diese Aufgabe wird durch die Merkmale des Anspruchs 1 gelöst.

Der genannte Förderwendel ist in seinem, beispielsweise im Wasser befindlichen Arbeitsbereich, frei liegend drehend und erfasst sämtliche einlaufenden Festkörper. Durch die stufenförmigen Bohrungen entsteht eine Siebwirkung, durch welche kleine Festkörper der wegströmenden Flüssigkeit zugegeben werden und wobei grössere Festkörper sicher vom Schneckenförderer erfasst, entwässert und soweit plastisch, zusätzlich verdichtet werden.

Ein entsprechend ausgestalteter Schneckenförderer kann problemlos horizontal angeordnet werden und ist dann vor allem für oberschlächtige Anlagen geeignet.

Eine gemäss Anspruch 2 in Schräglage eingebaute Vorrichtung, benötigt keine baulichen Aenderungen an bestehenden Anlagen.

Die Vorrichtung nach Anspruch 3 hat den Vorteil, dass der Ausstoss der Feststoffe auf einer, den örtlichen Verhältnissen angepassten Höhe erfolgen kann und dass die Feststoffe hierbei zusätzlich über einen längeren Zeitraum entwässert werden.

Durch die kegelförmigen Verjüngungen im Gehäuse, Anspruch 4, lassen sich die Filterrückstände nochmals zusätzlich verdichten und gleichzeitig entwässern.

Die gemäss Anspruch 5 angeordnete Verjüngung ergibt eine zusätzlich verbesserte Verdichtung der Rückstände durch die hohe Presswirkung der Förderschnecke.

Mittels einer dünnen Leitwelle, vgl. Anspruch 6, kann die Reibung des Förderwendels und die Belastung des Lagers der Förderschnecke reduziert werden, ohne dass der Einlauf der Flüssigkeit behindert wird.

Das in Anspruch 7 genannte Verhältnis der Bohrungen im Gehäuse des Schneckenförderers gewährleistet eine hohe Siebwirkung durch eine Vielzahl von Durchlässen, ohne das Gehäuse störend zu schwächen und/oder die notwendige axiale Führung des Schneckenförderers, beispielsweise beim Eindringen von Steinen, zu gefährden.

Das Betriebsverfahren nach Anspruch 8 reduziert den Energieaufwand und verhindert einen unnötigen Verschleiss der Vorrichtung. Nachfolgend wird anhand von Zeichnungen der Erfindungsgegenstand näher erläutert.

Es zeigen:
- Fig. 1: einen Feinrechen, in einer konventionellen Kläranlage in Schräglage, in den Zulaufkanal eingebaut,
- Fig. 2: den Schneckenförderer in Fig. 1, mit seinem linksseitigen offenen Förderwendel und seiner rechtsseitigen Förderschnecke mit Antriebswelle,
- Fig. 3: den Uebergang A, betrachtet in Richtung B, zwischen Förderwendel und Förderschnecke,
- Fig. 4: einen horizontal angeordneten Feinrechen, mit kegelförmigen Verjüngungen in einer Kläranlage mit bergseitigem Einlauf,
- Fig. 5: die Wirkungsweise des Förderwendels Fig. 1, am Beispiel von schwimmenden Objekten (Wattestäbchen),
- Fig. 6: die Siebwirkung des Gehäuses des Schneckenförderers Fig. 1, am Beispiel von kleinen Kieseln und
- Fig. 7: einen Ausschnitt des Gehäuses des Förderers Fig. 1, mit seinen Durchlässen im Bereich des Förderwendels.

In sämtlichen Figuren sind für gleiche Teile gleiche Bezugsziffern verwendet.

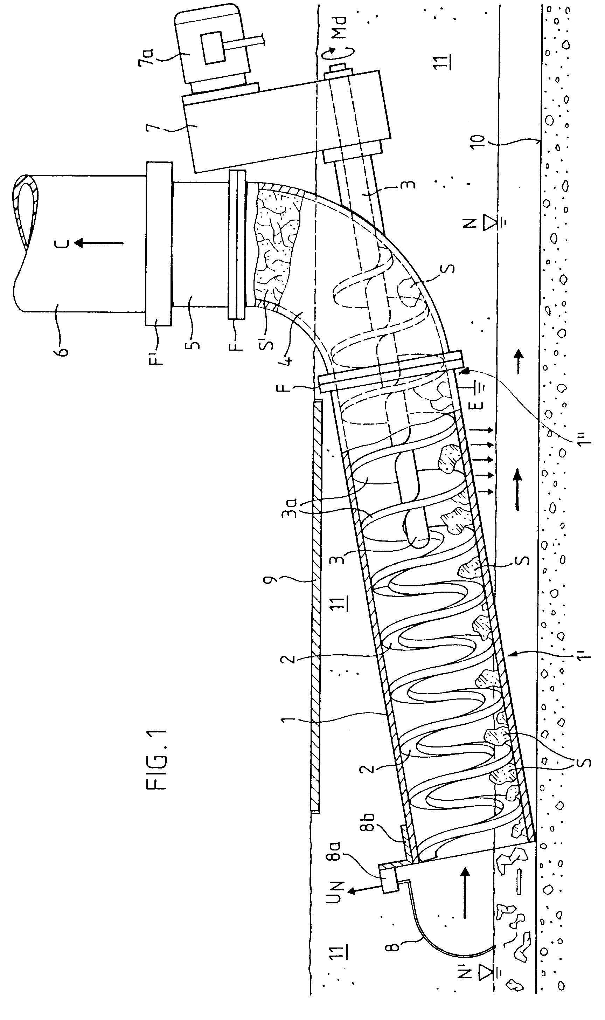

In Fig. 1 ist mit 1 ein Rohr bezeichnet, welches das Gehäuse eines Schneckenförderers bildet. Das Rohr 1 ist aufgeteilt in einen Siebteil 1' mit hier nicht dargestellten Bohrungen und einen Pressteil 1'', ohne Durchlässe. Im Innern des Rohres 1 befindet sich linksseitig ein offener Förderwendel 2, ohne Welle, der übergeht auf eine Förderschnecke 3a, welche mit einer Antriebswelle 3 in gewohnter Weise verbunden ist. Das geradlinige Rohr 1 ist über eine Flanschverbindung F mit einem Rohrkrümmer 4 verschraubt, während die Welle 3 geradlinig aus diesem Rohrkrümmer 4 herausführt und über ein Getriebe 7 mit Antriebsmotor 7a mit ca. 5 Umdrehungen pro Minute im Uhrzeigersinn (Md) gedreht wird. Der Rohrkrümmer 4 ist über eine weitere Flanschverbindung F mit einem Zwischenstück 5 verbunden, welches seinerseits über einen weiteren Flansch F' mit einem Ausstossrohr 6 aus HPE (Hart-Polyethylen) in Verbindung steht. Das im Kanal 11 in Pfeilrichtung strömende Schmutzwasser wird im Einlaufbereich auf sein maximales Niveau N' überwacht durch einen Sensor 8, einer als Niveau-Taster ausgestalteten Elektrode, welche über einen grossflächigen Isolator 8a und einen Befestigungswinkel 8b am Rohr 1 befestigt ist.

Wenn das Ende des Sensors 8, bestehend aus einem Metalldraht, an welchem ein Pol einer Niederspannungsquelle U_{N} angeschlossen ist, ins Schmutzwasser eintaucht, entsteht über das an der Stelle E geerdete Metallrohr 1 ein Steuerstrom, welcher seinerseits mit einer Steuerung mit Schaltschützen - nicht dargestellt - den Antriebsmotor 7a einschaltet. Am Steuerkreis befindet sich zusätzlich ein einstellbares Verzögerungsrelais, welches auch nach einem Absinken des Schmutzwassers unterhalb des Niveaus N' den Schneckenförderer bzw. den Antriebsmotor 7a einige Minuten länger antreibt.

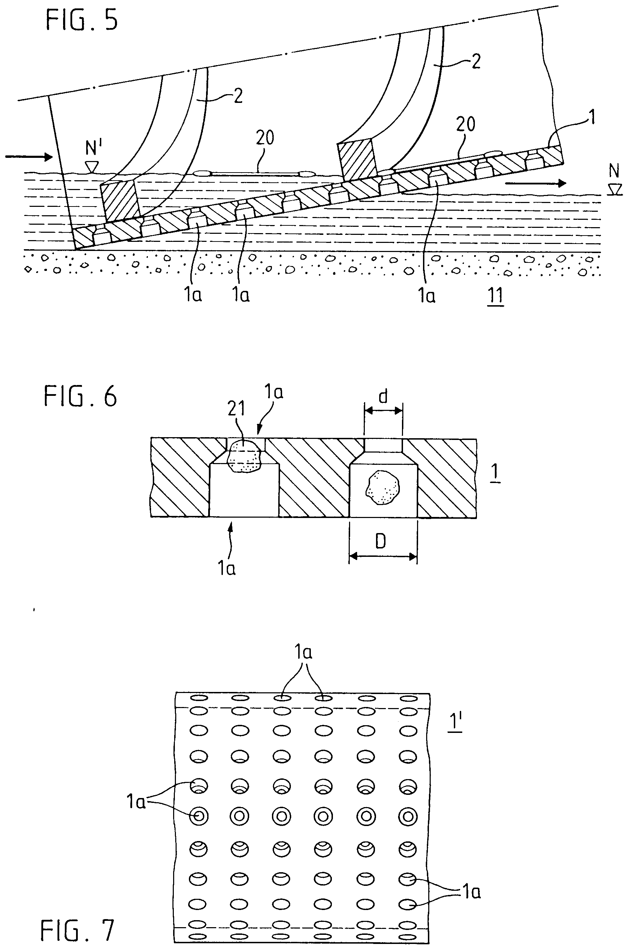

Durch die Schräglage des Rohres 1 ist das in Pfeilrichtung fliessende Schmutzwasser gezwungen, ins Rohr einzudringen. Der drehende Wendel 2 befördert durch seine schraubenartige Bewegung Schwebeteile, Festkörper etc. ins Rohrinnere, befördert diese in mehr oder weniger grossen Schmutzteilen S über das Wasserniveau N hinaus und verdichtet sie im Rohrkrümmer 5 zu einem vollständigen Pfropfen, S', der sukzessive nach oben befördert wird und in ein Behältnis C abgelagert wird. Die Entwässerung geschieht durch die in den Fig. 5 bis 7 näher dargestellten Bohrungen 1a.

Der Durchfluss des gereinigten Wassers erfolgt durch die in Fig. 6 bis Fig. 7 näher dargestellten Bohrungen 1a.

Vorzugsweise erfolgt die Entwässerung des Siebgutes im hinteren Teil des Rohres 1 ebenfalls durch gleiche Bohrungen 1a, welche aber in grösseren Abständen, d.h. in geringerer, dem Wassergehalt des Siebgutes angepasster Anzahl vorhanden sind.

Diese höchst einfache Einrichtung bewirkt folgendes:
Befindet sich im Gerinne, Kanal 11, Fig. 1 bzw. Fig. 5 relativ sauberes Schmutzwasser, so durchströmt dieses die Bohrungen im Rohr 1; das Niveau des Wasser vor diesem verändert sich kaum. Trägt das Wasser jedoch eine grosse Schmutzfracht mit, so bleibt diese im vorderen Bereich des Förderwendels 2 hängen an der Innenwand des Rohres 1, das Wasser staut sich und bei Erreichen des maximalen Niveaus N' setzt sich der Schneckenförderer 2, 3, 3a in Bewegung. Dadurch werden die Schmutzteile weiter bewegt, und die verstopften Rohrbereiche bzw. Bohrungen 1a werden freigelegt, Sand und Kies unterhalb einer vorgegebenen Grösse fallen aus, das Wasserniveau sinkt und die Anlage wird nach der vorgewählten Verzögerungszeit von 1 bis 3 Minuten ausgeschaltet; die Anlage ist bereit für die nächste Schmutzfracht.

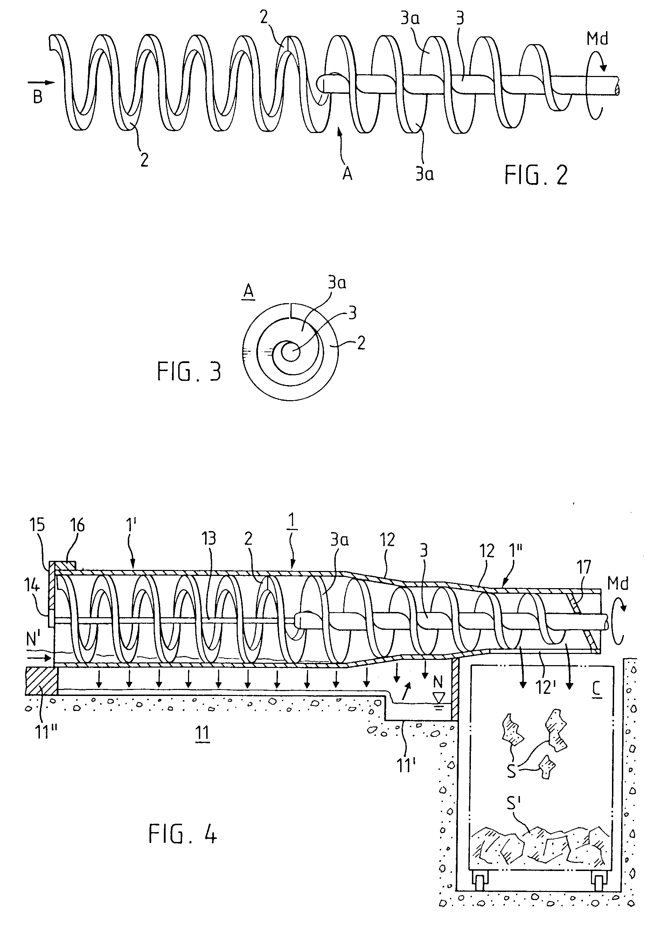

Der Aufbau des Schneckenförderers ist in Fig. 2 klar zu erkennen. Auf der Welle 3 befindet sich mit dieser durch Schweissnähte verbunden die Förderschnecke 3a sowie an der Stelle A der Förderwendel 2 freitragend angeschweisst.

Der Uebergang zwischen den Teilen 2, 3, 3a ist aus der Betrachtungsrichtung B gesehen, aus Fig. 3 näher ersichtlich.

In einer weiter entwickelten Ausführungform, Fig. 4, erfolgt keine Umlenkung des Siebgutes; dieses wird horizontal gefördert und fällt über einen Durchlass 12' direkt in ein Behältnis C. Der Kanal 11 ist in seinem Mittelteil gleich ausgestaltet wie in Fig. 1, endet jedoch in einem tiefer liegenden seitlichen Auslauf 11' und weist einlaufseitig einen Sockel 11'' auf.

Im weiteren ist das Rohr 1' hier mit kegelförmigen Verjüngungen 12 versehen, der innenliegende Schneckenförderer ist diesen Verjüngungen angepasst und der Siebteil 1' ist gegenüber dem Ausführungsbeispiel Fig. 1 länger gestaltet, da das durch den kürzeren Förderweg noch nasse Siebgut einer zusätzlichen Entwässerung bedarf.

Ausserdem ist in dieser Variante eine dünne Leitwelle 13 ersichtlich, mit einem endseitigen Kugellager 14, welches in einem Support 15 an einem Flanschsegment 16 am Rohr 1' befestigt ist. Der Antrieb, analog zu Fig 1, ist hier nicht eingezeichnet. Am Ende des Rohres 1, im Pressteil 12, befindet sich eine schräggestellte Endplatte 17. Die Wirkungsweise und Steuerung erfolgt analog Fig. 1; das hier über einen längeren Weg der Förderstrecke austropfende Wasser ist durch senkrechte Pfeile symbolisiert.

Die Fig. 5 zeigt die Filterwirkung der Anlage am Beispiel von Wattestäbchen 20. Diese werden durch die Förderwendel 2 in Pfeilrichtung bewegt, bzw. "hochgeschraubt", und aus dem Wasser herausgehoben und entsprechend wegbefördert. Durch die Vielzahl der Bohrungen 1a kann das Filtrat leicht abfliessen. Die Wirkung dieser stufenförmig ausgestalteten Bohrungen 1a ist anhand kleiner Kiesel 21 in Fig. 6 gezeigt. Unterhalb einer Siebgrösse d = 6,5 mm können diese Kiesel durchtreten, sie entfernen sich nach kurzem Weg; entweder werden sie vom Wasser fortgetragen oder werden frei fallend in dieses zurückgeführt und weggeschwemmt. Der grössere Druchmesser D beträgt 11,0 mm.

Aus Fig. 7 ist ein Ausschnitt aus einem Teil 1' des Rohres 1 zu sehen. In einem realisierten Ausführungsbeispiel sind durch eine numerisch gesteuerte Werkzeugmaschine im Rohr 1 insgesamt 3000 Bohrungen erstellt worden.

Es hat sich gezeigt, dass aufgrund des hohen Sandanteils in üblichen Schmutzfrachten der Förderwendel 2 aus einem sehr abriebfesten hochlegierten Stahl gefertigt sein muss. Bewährt hat sich ein manganlegierter Stahl (nach DIN 18703). Zwischen dem Schneckenförderer 2, 3, 3a und dem Rohr 1 hat sich zudem ein einseitiges mittleres Spiel von 0,3 bis 0,5 mm als günstig erwiesen. Bei einem inneren Rohrdurchmesser von 380 mm wurden vertikale Förderhöhen des Siebgutes bis zu 3000 mm problemlos erreicht.

Zur Erleichterung der Reinigung der Vorrichtung empfiehlt es sich, die Bohrungen 1a gemäss Fig. 7 im Siebteil 1' peripher vollständig umlaufend auszuführen, obwohl man im oberen Teil mit weniger Bohrungen auskommen könnte. Es hat sich nämlich gezeigt, dass durch den Einbau einer einfachen, stationären Spritzeinrichtung unterhalb einer Abdeckplatte 9, Fig. 1, das Rohr 1 bei periodischer äusserer Reinigung rundum sauber gehalten werden kann, bzw. die Bohrungen 1a auf diese Weise leicht frei zu halten sind.

Als besonderer Vorteil erweist sich in der Praxis der geringe Strömungswiderstand der Anlage, so dass bereits ein kleines Gefälle in Kanal 11 ausreicht, da der Wassereinlauf vorne, stirnseitig des Rohres 1, weitgehend offen ist.

Selbstverständlich sind die am Beispiel eines Feinrechens in einer Kläranlage ausgeführten Ausführungsformen nicht auf diese Verwendung beschränkt. Doch hat hier der Versuchsbetrieb gezeigt, dass das Filtrat einerseits von grösseren Festkörpern zu 100% frei ist und andererseits der mitgeführte Sand durch Absetzen in einem anschliessenden Sandbecken gesammelt werden kann, ohne dass das zur Verbrennung bestimmte Siebgut S' stark mit mineralischen Stoffen belastet ist.

Die erfindungsgemässe Vorrichtung ermöglicht eine kleinere Dimensionierung von Kläranlagen und stellt damit einen wirtschaftlich wertvollen Beitrag zum Umweltschutz dar. Sie kann in weiten Grenzen dem Verwendungszweck bzw. der Art des Siebgutes angepasst werden, beispielsweise auch durch eine die gezielte Verdichtung des Siebgutes hervorrufende, degressive Änderung der Steigung des Schneckenförderes.

Der Erfindungsgegenstand bewirkt eine einwandfreie mechanische Reinigung von Abwässern und kann auch in Fällen, wo keine weiteren Klärstufen angeschlossen sind, gute Dienste leisten.

### Bezeichnungsliste

- 1: Rohr (Gehäuse)
- 1: 1' Siebteil von 1 (mit Bohrungen)
- 1a: stufenförmige Bohrungen
- 1'': Pressteil von 1 (ohne Durchlässe)
- 2: offener Förderwendel (wellenlos)
- 3: Antriebswelle (mit Förderschnecke)
- 3a: Förderschnecke
- 4: Rohrbogen (Rohrkrümmer)
- 5: Zwischenstück
- 6: Ausstossrohr (PVC)
- 7: Getriebe
- 7a: Antriebsmotor von 7
- 8: Sensor/Niveau-Taster (Elektrode)
- 8a: Isolator
- 8b: Befestigungswinkel
- 9: Abdeckplatte
- 10: Kanalboden (Gerinne)
- 11,11': Kanalmauer (Gerinne)
- 11'': Sockel zu 11
- 12: Verjüngung
- 12': Durchlass
- 13: Leitwelle (Zentrierung von 3)
- 14: Endlager (wasserdichtes Kugellager)
- 15: Support
- 16: Flanschsegment
- 17: Endplatte
- 20: schwimmendes Objekt (Wattestäbchen)
- 21: Kiesel
- A: Übergang Förderwendel zu Förderschnecke
- B: Betrachtungsrichtung
- C: Container (Filterrückstände)
- d, D: Bohrungendurchmesser
- F,F': Flanschverbindung
- M_{d}: Uhrzeigersinn
- N: Wasserniveau (Filtrat)
- N': maximaler Niveau-Einlauf (Schmutzwasser)
- S: Schmutzteile (Siebgut)
- S': Pfropfen
- U_{N}: Niederspannungsquelle

## Patentansprüche

1. Vorrichtung zum Entfernen von Feststoffen vorgegebener Grösse aus einer in einem Kanal, bzw. Gerinne geführten, strömenden Flüssigkeit, welche Vorrichtung die Feststoffe in einem rohrförmigen Gehäuse (1) angeordneten Schneckenförderer mit einem axial frei durchgängigen Förderwendel (2) verdichtet, entwässert und von diesem in ein Behältnis fördert, welcher Schneckenförderer antriebseitig eine Förderschnecke (3a) mit einer zentralen Antriebswelle (3) aufweist, an welche übergangslos ein offener Förderwendel (2) angeschlossen ist, dadurch gekennzeichnet, dass das rohrförmige Gehäuse (1) ein Siebteil (1') mit stufenförmigen Bohrungen (1a) aufweist und dass der Förderwendel (2) im Innern des Rohres (1 bzw. 1') peripher gelagert und geführt ist und in Schräglage oder parallel zur strömenden Flüssigkeit (N') im Kanal bzw. Gerinne (11) eintaucht.

2. Vorrichtung nach Anspruch 1, dadurch gekennzeichnet, dass das Rohr (1) unter einem Winkel von 5° bis 20° zur strömenden Flüssigkeit (N') einlaufseitig auf dem Kanalboden (10) angeordnet ist.

3. Vorrichtung nach Anspruch 2, dadurch gekennzeichnet, dass das Rohr (1) einen angeflanschten Rohrkrümmer (4) aufweist, in welchem der Endbereich der Förderschnecke (3a) dem Radius der Rohrkrümmung angepasst ist und in welchem Rohrkrümmer (4) die Antriebswelle (3) endseitig gelagert und herausgeführt ist.

4. Vorrichtung nach Anspruch 1 oder 2, dadurch gekennzeichnet, dass das Rohr (1) mindestens eine kegelförmige Verjüngung (12) aufweist.

5. Vorrichtung nach Anspruch 4, dadurch gekennzeichnet, dass die Verjüngung im Bereich der Förderschnecke (3, 3a) ist.

6. Vorrichtung nach Anspruch 1, dadurch gekennzeichnet, dass eine einlaufseitig gelagerte Leitwelle (13) vorgesehen ist, welche zentrisch in die Schneckenwelle (3) eingesetzt ist.

7. Vorrichtung nach Anspruch 1, dadurch gekennzeichnet, dass die stufenförmigen Bohrungen (1a) abgesetzt sind, und dass die kleineren Bohrungen (d), dem Schneckenförderer (2, 3, 3a) zugewandt, und die grösseren Bohrungen (D) peripher vorgesehen sind, wobei der Durchmesser der grösseren Bohrungen (D) 1,5 bis 2,2 mal dem Durchmesser der kleineren Bohrungen (d) entspricht.

8. Verfahren zum diskontinuierlichen Betrieb einer Vorrichtung nach einem der Ansprüche 1 bis 7, dadurch gekennzeichnet, dass über einen Sensor (8) das Wasserniveau (N) im Einlauf des Rohres (1) überwacht wird, und dass nach dem Erreichen eines vorgewählten maximalen Niveaus (N') der Antrieb (7, 7a) mit einer Drehzahl im Bereich von 5 U/min in Betrieb gesetzt wird, und dass nach Unterschreiten des Niveaus (N') der Antrieb (7, 7a) zeitverzögert ausgeschaltet wird.

## Claims

1. A device for removing solids of pre-determined size from a flowing liquid conveyed in a duct or channel, the device compressing and de-watering the solids in a screw conveyor arranged [in a] tubular housing (1) with a conveying helix (2) freely traversable axially and conveying them therefrom into a container, the screw conveyor being provided at the driven end with a conveying screw (3a) with a central drive shaft (3) which passes without a break into an open conveying helix (2), **characterized in that** the tubular housing (1) comprises a sieve portion (1') with stepped bores (1a), and the conveying helix (2) is mounted and guided at its periphery in the interior of the tube (1 and 1' respectively), and is immersed in the duct or channel (11) in an oblique position or parallel to the flowing liquid (**N'**).

2. A device according to Claim 1, **characterized in that** the tube (1) is arranged on the base (10) of the duct at an angle of from 5° to 20° to the flowing liquid (**N'**) at the inlet end.

3. A device according to Claim 2, **characterized in that** the tube (1) comprises a flange-mounted tube bend (4) in which the end region of the conveying screw (3a) is adapted to the radius of the tube bend and in which tube bend (4) the drive shaft (3) is mounted at the end and extends outwards.

4. A device according to Claim 1 or 2, **characterized in that** the tube (1) comprises at least one conical taper (12).

5. A device according to Claim 4, **characterized in that** the taper is situated in the region of the conveying screw (3, 3a).

6. A device according to Claim 1, **characterized in that** a guide shaft (13) mounted at the inlet end is provided, and is inserted centrally in the screw shaft (3).

7. A device according to Claim 1, **characterized in that** the stepped bores (1a) are offset, and the smaller bores (**d**) are provided facing the screw conveyor (2, 3, 3a) and the larger bores (**D**) are provided on the periphery, wherein the diameter of the larger bores (**D**) corresponds to between 1·5 and 2·2 times the diameter of the smaller bores (**d**).

8. A method of discontinuously operating a device according to one of Claims 1 to 7 **characterized in that** the water level (**N**) in the inlet of the tube (1) is monitored by way of a sensor (8), and after a pre-selected maximum level (**N'**) has been reached the drive (7, 7a) is set into operation at a rotational speed in the range of 5 r.p.m., and after the level (**N**) drops below the maximum (**N'**) the drive (7, 7a) is switched off with a time delay.

## Revendications

1. Appareil pour séparer des solides d'une grosseur prédéfinie d'un écoulement de liquide, guidé dans un canal et/ou une rigole, appareil qui compacte, assèche les solides dans un convoyeur à vis, disposé dans un carter tubulaire (1) et muni d'une hélice (2) à libre passage dans le sens axial, et les transporte de ce convoyeur dans un réservoir, le convoyeur à vis présentant, côté entraînement, une vis sans fin (3a) avec un arbre moteur (3) central, auquel est raccordé sans transition une hélice (2) ouverte, caractérisé en ce que le carter tubulaire (1) présente une partie criblage (1') avec des trous (1a) échelonnés, et en ce que l'hélice (2) est logée et guidée d'une manière périphérique à l'intérieur du conduit (1 et/ou 1'), et plonge dans le canal et/ou la rigole (11) en position oblique ou parallèlement à l'écoulement de liquide (N').

2. Appareil suivant la revendication 1, caractérisé en ce que le conduit (1) est disposé côté admission sur le fond (10) du canal, sous un angle de 5 à 20° par rapport à l'écoulement de liquide (N').

3. Appareil suivant la revendication 2, caractérisé en ce que le conduit (1) présente un raccord coudé (4) bridé, dans lequel la zone extrême de la vis sans fin (3a) est adaptée au rayon de courbure, raccord (4) dans lequel l'arbre moteur (3) est logé et guidé à l'extérieur, côté extrême.

4. Appareil suivant l'une des revendications 1 ou 2, caractérisé en ce que le conduit (1) présente au moins un rétrécissement conique (12).

5. Appareil suivant la revendication 4, caractérisé en ce que le rétrécissement se situe dans la zone de la vis sans fin (3, 3a).

6. Appareil suivant la revendication 1, caractérisé par un arbre de guidage (13) logé côté admission, monté et centré dans l'arbre (3) de la vis.

7. Appareil suivant la revendication 1, caractérisé en ce que les trous échelonnés (1a) sont décalés, et en ce que les trous les plus petits (d) sont tournés vers le convoyeur à vis (2, 3, 3a), et les trous les plus gros (D) sont prévus à la périphérie, le diamètre des trous les plus gros (D) équivalant à 1,5 - 2,2 fois le diamètre des trous les plus petits (d).

8. Procédé pour le fonctionnement discontinu d'un appareil suivant l'une des revendications 1 à 7, caractérisé en ce que le niveau d'eau (N) est contrôlé dans l'admission du conduit (1) par l'intermédiaire d'un détecteur (8), en ce que la commande (7, 7a) est mise en marche à une vitesse de l'ordre de 5 tours/minute après l'obtention d'un niveau maximal prédéfini (N'), et en ce que la commande (7, 7a) est déconnectée, avec un retard dans le temps, après le dépassement par le bas du niveau (N').
